# EUROPEAN PATENT APPLICATION

(11) **EP 4 622 174 A1**
(43) Date of publication of application: **24.09.2025**
(21) Application number: 24219389.4
(22) Date of filing: 12.12.2024
(51) Int. Cl.: H04L 9/40

(54) **CLOUD NETWORK SYSTEM, CLOUD NETWORK MESSAGE PROCESSING METHOD, APPARATUS, DEVICE AND MEDIUM**

(30) Priority: 20.03.2024 CN 202410323585
(71) Applicant: Beijing Baidu Netcom Science Technology Co., Ltd., Beijing 100085 (CN)
(72) Inventor: ZHOU, Qingzhi, Beijing, 100085 (CN)
(74) Representative: Michalski Hüttermann & Partner Patentanwälte mbB

(57) **Abstract**

The present disclosure provides a cloud network system, a cloud network message processing method, apparatus and medium, which relate to the field of artificial intelligence technology, specifically to the fields of cloud networks and network security, and may be applied to intelligent cloud scenarios. The cloud network message processing method includes: obtaining a cloud network message, where the cloud network message is sent from a source end to a cloud security device; determining a target security device for the cloud network message from pre-configured multiple types of candidate security devices, where the candidate security devices include a built-in security device inside the cloud security device and a third-party security device outside the cloud security device; sending the cloud network message to the target security device for security processing, and sending the security-processed cloud network message from the target security device to a destination end. The third-party security device can be supported on cloud according to the present disclosure.

## Description

### TECHNICAL FIELD

The present disclosure relates to the field of artificial intelligence technology, particularly to the fields of cloud networks and network security, which may be applied to intelligent cloud scenarios, and more particularly to a cloud network system, a cloud network message processing method, apparatus and medium.

### BACKGROUND

In the field of network security, users typically use firewalls for network security protection. For example, in traditional Internet Data Center (IDC) environments, users may provide firewalls between public networks and internal networks. Similarly, in cloud environments, cloud vendors also provide their own cloud firewalls to protect data traffic.

### SUMMARY

The present disclosure provides a cloud network system, a cloud network message processing method, apparatus and medium.

According to one aspect of the present disclosure, a cloud network message processing method is provided, including: obtaining a cloud network message, where the cloud network message is sent from a source end to a cloud security device; determining a target security device for the cloud network message from pre-configured multiple types of candidate security devices, where the candidate security devices include a built-in security device inside the cloud security device and a third-party security device outside the cloud security device; sending the cloud network message to the target security device for security processing, and sending the security-processed cloud network message to a destination end.

According to another aspect of the present disclosure, a cloud network message processing apparatus is provided, including: an obtaining module configured for obtaining a cloud network message; where the cloud network message is sent from a source end to a cloud security device; a determination module configured for determining a target security device for the cloud network message from pre-configured multiple types of candidate security devices; where the candidate security devices include: a built-in security device inside the cloud security device, and a third-party security device outside the cloud security device; and a forwarding module configured for sending the cloud network message to the target security device for security processing, and sending the cloud network message after security processing to a destination end.

According to another aspect of the present disclosure, a cloud network system is provided, including: a traffic director, a built-in security device provided inside a cloud security device, and a third-party security device provided outside the cloud security device. The traffic director is used for obtaining a cloud network message; determining a target security device for the cloud network message from pre-configured multiple types of candidate security devices; sending the cloud network message to the target security device for security processing, and sending the security-processed cloud network message to a destination end. The cloud network message is sent from a source end to the cloud security device. The candidate security devices include the built-in security device and the third-party security device. The built-in security device is used for performing security processing on the cloud network message after receiving it. The third-party security device is used for performing security processing on the cloud network message after receiving it.

According to yet another aspect of the present disclosure, an electronic device is provided, including: at least one processor; and a memory communicatively connected to the at least one processor. The memory stores instructions executable by the at least one processor, which, when executed by the at least one processor, cause the at least one processor to perform the method described in any of the above aspects.

According to yet another aspect of the present application, a non-transitory computer-readable storage medium storing computer instructions is provided, where the computer instructions are used to enable the computer to execute any of the above methods described in the above various aspects.

According to yet another aspect of the present disclosure, a computer program product is provided, which includes computer programs that, when executed by a processor, implement any of the above methods described in the above various aspects.

It should be understood that the content described in this section is not intended to identify key or essential features of the embodiments of the present disclosure, nor is it intended to limit the scope of the present disclosure. Other features of the present disclosure will become readily apparent through the following description.

### BRIEF DESCRIPTION OF THE DRAWINGS

The drawings are used for a better understanding of this solution and do not constitute a limitation of the present disclosure. Where:
Figure 1 is a schematic diagram according to a first embodiment of the present disclosure;
Figure 2 is a schematic diagram of an application scenario provided according to an embodiment of the present disclosure;
Figure 3 is a schematic diagram of communication between a public network and VPC provided according to an embodiment of the present disclosure;
Figure 4 is a schematic diagram according to a second embodiment of the present disclosure;
Figure 5 is a schematic diagram according to a third embodiment of the present disclosure;
Figure 6 is a schematic diagram according to a fourth embodiment of the present disclosure; and
Figure 7 is a schematic diagram of an electronic device for implementing the cloud network message processing method of an embodiment of the present disclosure.

### DETAILED DESCRIPTION OF EMBODIMENTS

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications may be made with respect to the embodiments described herein without departing from the scope and spirit of the present disclosure. Similarly, for clarity and conciseness, the descriptions of the known functions and structures are omitted in the descriptions below.

In related technologies, cloud vendors provide their own cloud firewalls for security protection. The cloud firewall is the same for different users.

However, in some scenarios, users wish to specify their own firewalls for security protection, rather than using the cloud firewall provided by the cloud vendor.

To this end, it is necessary to solve the problem of how to support third-party security devices in the cloud.

To support third-party security devices in the cloud, the present disclosure provides the following embodiments.

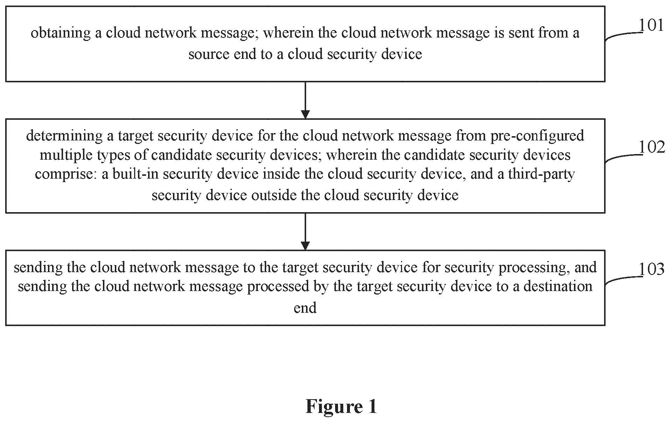

Figure 1 is a schematic diagram according to a first embodiment of the present disclosure. This embodiment provides a cloud network message processing method, as shown in Figure 1, which includes:
101: Obtaining a cloud network message; the cloud network message is sent from a source end to a cloud security device.
102: Determining a target security device for the cloud network message from pre-configured multiple types of candidate security devices; where the candidate security devices include: a built-in security device inside the cloud security device, and a third-party security device outside the cloud security device.
103: Sending the cloud network message to the target security device for security processing, and sending the security-processed cloud network message to a destination end.

In this embodiment, the executing subject may be called a traffic director. This traffic director may be provided inside the cloud security device, or it may also be provided outside the cloud security device.

Specifically, if the traffic director is provided inside the cloud security device, then the cloud security device internally includes: the traffic director and the built-in security device. The traffic director is mainly used for forwarding cloud network messages(or packets), while the built-in security device is mainly used for performing security processing on cloud network messages after receiving them.

If the traffic director is provided outside the cloud security device, then the traffic director may be pre-connected to the cloud security device. After the cloud security device receives a cloud network message sent from the source end, it sends the cloud network message to the traffic director. The traffic director determines the target security device, then forwards the cloud network message to the target security device, and forwards the security-processed cloud network message returned by the target security device to the destination end. At this time, the cloud security device internally includes a built-in security device, which is mainly used for performing security processing on cloud network messages after receiving them.

Security device refers to a device that performs security processing on network messages. Examples include: firewalls, intrusion detection systems, data encryption devices, security gateways, etc.

Taking a firewall as an example of a security device, the cloud security device specifically refers to a cloud firewall, the built-in security device specifically refers to a built-in firewall, and the third-party security device specifically refers to a third-party firewall.

Source end refers to the device sending the cloud network message.

Destination end refers to the device receiving the cloud network message.

Assuming the message is transmitted from the public network to the cloud network, the source end refers to the public network device, and the destination end refers to the cloud network device. Furthermore, the cloud security device usually interacts with gateway devices. Based on the above example, the source end is specifically the public network gateway, and the destination end is the cloud network gateway.

Candidate security devices refer to security devices that users may choose from.

In related technologies, in a cloud environment, cloud vendors only provide cloud security devices, and different users share the same cloud security device. That is, for different users, the cloud security device is the same.

However, in some scenarios, users want to specify their own security devices.

Third-party security device refers to a security device other than the cloud security device corresponding to the cloud service currently used by the user. A third-party security device may be a security device provided by an offline vendor; or, a third-party security device may be a cloud security device provided by another cloud vendor. For example, if user A is currently using cloud services provided by a first cloud vendor, user A may use the cloud firewall provided by a second cloud vendor as a third-party security device.

Specifically, users may purchase images of third-party security devices and deploy third-party security devices on one or more cloud hosts based on these images.

In this embodiment, taking two types of candidate security devices as an example, one type is the cloud security device provided by the cloud vendor, which may also be called a built-in security device; the other type is the third-party security device outside the cloud security device deployed by the user.

Furthermore, each type of candidate security device may include one or multiple security devices. For example, there may be one or more built-in security devices inside the cloud security device, and also there may be one or more third-party security devices.

Although different users share the same cloud security device, in different scenarios, different users may want to use different types of candidate security devices. For example, user A may want to use the cloud security device (built-in security device), while user B may want to use a third-party security device.

The target security device refers to the security device that the user wants to use. For example, the target security device may be a built-in security device or a third-party security device.

Specifically, users may pre-configure the traffic director, with the configuration information recording the type of target security device the user wants to use. For example, the configuration information may include: user A corresponds to type 1 (for example, type 1 refers to the cloud security device), user B corresponds to type 2 (for example, type 2 refers to a third-party security device). The cloud network message may carry user identification information. After receiving the cloud network message, the traffic director may determine the type of target security device based on the user identification information carried in it, as well as the pre-configured correspondence between user identification information and security device types. For example, based on the above example, if the cloud network message carries user A's identification information, then the type of target security device is determined to be the cloud security device. If the cloud network message carries user B's identification information, then the type of target security device is determined to be a third-party security device. If there is only one security device of the determined type, that security device is taken as the final target security device. If there are multiple security devices of the determined type, a final target security device may be further determined from these multiple security devices based on a preset policy. For example, if it's determined based on the user identification information that the security device type is a third-party security device, and there is only one pre-configured third-party security device, then that one third-party security device is taken as the target security device. Or, if it's determined based on the user identification information that the security device type is a third-party security device, and there are multiple pre-configured third-party security devices, then one third-party security device may be determined as the target security device from these multiple third-party security devices based on a preset policy (such as random selection, based on session information, etc.).

After determining the target security device, the traffic director sends the cloud network message to the target security device.

The cloud vendor may pre-establish a direction path between the traffic director and the built-in security device. This way, if a user wants to use the built-in security device, the cloud network message may be sent to the built-in security device according to the direction path provided by the cloud vendor. If a user wants to use a third-party security device, after deploying the third-party security device, the user may also configure a direction path between the traffic director and the third-party security device, so that the cloud network message may be sent to the third-party security device through the user-configured direction path.

Since the direction path is pre-configured, after the traffic director receives a cloud network message and determines the target security device, it may forward the cloud network message to the target security device according to the pre-configured direction path corresponding to the target security device. In contrast, if forwarding is based on routing policies, after receiving a cloud network message, it would be necessary to perform routing analysis, identification, and other processing on the cloud network message to determine the routing path, and then forward the message according to the routing path. In this embodiment, by forwarding through the pre-configured direction path, there is no need for the aforementioned routing analysis, identification, and other processing, which may improve the efficiency of message forwarding, thereby improving the processing efficiency of cloud network messages.

Specifically, different output ports may be configured on the traffic director corresponding to different candidate security devices, and cloud network messages may be forwarded through the output port corresponding to the target security device. For example, the port corresponding to the built-in security device is the first output port of the traffic director, and the port corresponding to the third-party security device is the second output port of the traffic director. The first output port and the second output port are different. If the target security device is determined to be the built-in security device, the cloud network message is forwarded to the built-in security device through the first output port. If the target security device is determined to be the third-party security device, the cloud network message is forwarded to the third-party security device through the second output port.

After receiving the cloud network message, the target security device performs security processing on the cloud network message according to pre-configured security protection rules, and returns the security-processed message to the traffic director, which then sends the message to the destination end.

In this embodiment, by setting third-party security devices as candidate security devices, determining the target security device from the candidate security devices, and performing security processing on cloud network messages through the target security device, when the target security device is a third-party security device, the third-party security device processes the cloud network messages, thus achieving support for third-party security devices in the cloud. Additionally, this embodiment processes cloud network messages sent from the source end to the cloud security device, so there is no need to change the routing policy at the source end. The source end may still send cloud network messages to the cloud security device according to the default routing policy, which reduces implementation complexity compared to the method of changing routing policies.

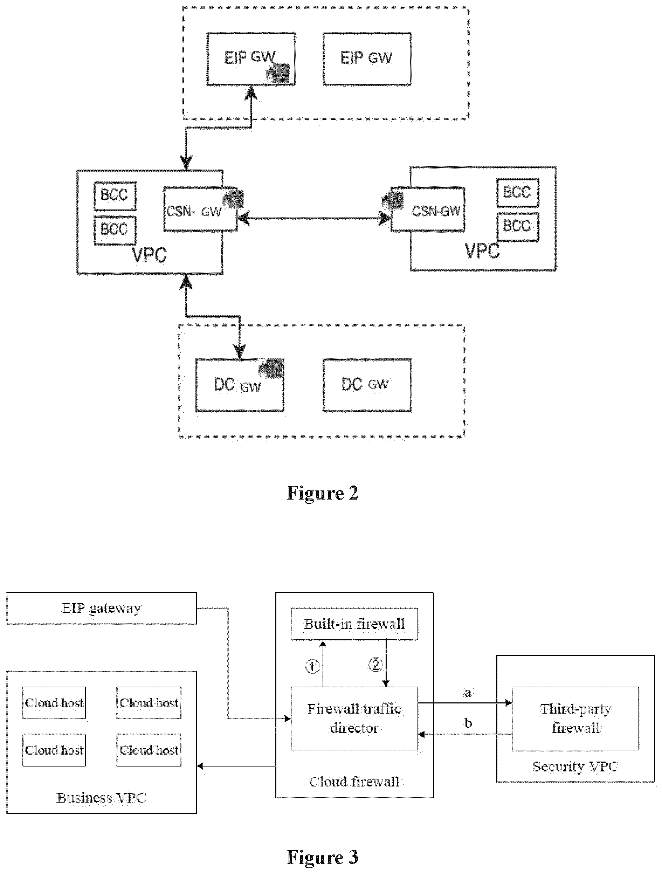

Figure 2 is a schematic diagram of an application scenario provided according to an embodiment of the present disclosure. In this embodiment, we take firewalls as an example of security devices. As shown in Figure 2, cloud vendors may deploy one or more Cloud Firewalls (CFW) between Elastic IP (EIP), Cloud Smart Network (CSN), and Dedicated Connection (DC) networks to perform security access control on traffic between the Internet, dedicated lines, and Virtual Private Clouds (VPC).

The cloud firewall provided by the cloud vendor is shared by all users. After enabling the cloud firewall service, users may route messages to the cloud firewall for security processing according to the default routing policy. However, in some scenarios, users want to use their own deployed third-party firewalls for security protection.

To support third-party firewalls, the routing policy on the gateway may be changed. Taking the communication between CSN and the user's IDC through the DC network as an example, the routing policy on the CSN gateway (CSN-GW) may be changed to route messages sent by CSN to the third-party firewall. After processing by the third-party firewall, the processed messages are sent to the DC gateway, and then sent to the IDC by the DC gateway. Correspondingly, the routing policy on the DC gateway also needs to be changed so that messages sent from IDC to the DC gateway may be forwarded by the DC gateway to the third-party firewall, processed by the third-party firewall, and then sent to CSN.

Although third-party firewalls may be supported by changing routing policies, this method is relatively complex as it requires changing the routing policies on gateways in various networks.

To reduce implementation complexity, in this embodiment, there is no need to change the routing policies of various gateways. After enabling the cloud firewall service, users may route messages to the cloud firewall according to the default routing policy. The cloud firewall then sends the messages to the built-in firewall or third-party firewall for security processing according to the configuration information preset by the user.

Taking the communication between the public network and VPC as an example, Figure 3 is a schematic diagram of communication between the public network and VPC provided according to an embodiment of the present disclosure. As shown in Figure 3, the cloud firewall includes: a firewall traffic director and a built-in firewall. The firewall traffic director is used to receive cloud network messages; determine the target firewall and forward cloud network messages to the target firewall for security processing; and send the security-processed cloud network messages from the target firewall to the destination end. The built-in firewall is used to perform security processing on cloud network messages forwarded to itself and return the security-processed cloud network messages to the firewall traffic director. The third-party firewall is deployed by the user and may be specifically deployed on one or more cloud hosts. The VPC processing cloud network messages may be called a business VPC, and the VPC deploying the third-party firewall may be called a security VPC.

Taking the public network sending cloud network messages to VPC as an example, the source end refers to the EIP gateway. The EIP gateway sends cloud network messages to the cloud firewall based on the default routing policy. The firewall traffic director inside the cloud firewall determines the target firewall according to the preset configuration information. For example, the cloud network message contains user identification information, and the firewall traffic director is pre-configured with the correspondence between user identification information and firewall types (built-in firewall or third-party firewall). Based on the user identification information contained in the cloud network message and this correspondence, the target firewall type may be determined. Taking one firewall for each type as an example, the firewall corresponding to the determined type is the target firewall.

Assuming the target firewall is a third-party firewall, the firewall traffic director sends the cloud network message to the third-party firewall through path a, and after the third-party firewall performs security processing on the cloud network message, it returns it to the firewall traffic director through path b. Or, assuming the target firewall is the built-in firewall, the firewall traffic director sends the cloud network message to the built-in firewall through path ①, and after the built-in firewall performs security processing on the cloud network message, it returns it to the firewall traffic director through path (2).

After receiving the security-processed cloud network message from the target firewall, the firewall traffic director sends this security-processed cloud network message to the destination end, such as a cloud host in the business VPC.

Combined with the above application scenario, the present disclosure also provides the following embodiments.

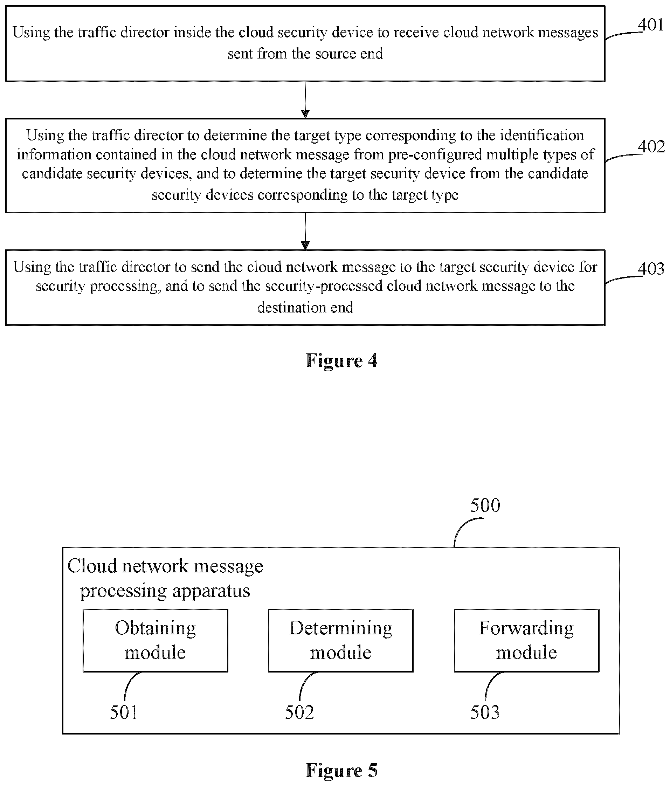

Figure 4 is a schematic diagram according to the second embodiment of the present disclosure, which provides a cloud network message processing method. This embodiment takes the cloud security device internally including a built-in security device and a traffic director as an example. The method includes:
401: Using the traffic director inside the cloud security device to receive cloud network messages sent from the source end.
402: Using the traffic director to determine the target type corresponding to the identification information contained in the cloud network message from pre-configured multiple types of candidate security devices, and to determine the target security device from the candidate security devices corresponding to the target type.
403: Using the traffic director to send the cloud network message to the target security device for security processing, and to send the security-processed cloud network message to the destination end.

In this embodiment, by providing a traffic director inside the cloud security device, cloud network messages received by the cloud security device from the source end may be forwarded to the target security device. This way, there's no need for the source end to perform operations such as changing routing policies. Cloud network messages may be forwarded to the target security device of the type required by the user without the user's awareness, thus supporting various types of target security devices in the cloud environment in a simple and efficient manner.

The cloud network message may contain identification information.

Specifically, the identification information may be user identification information. In this case, a correspondence between user identification information and security device types may be pre-configured, and the target type corresponding to the identification information contained in the cloud network message may be determined based on this correspondence. Alternatively, the identification information may also be type identification information, in which case the type indicated by this type identification information may be directly used as the target type.

Afterwards, the target security device is determined from the candidate security devices corresponding to the target type.

In this embodiment, by determining the target type based on the identification information contained in the cloud network, and then determining the target security device based on the candidate security devices corresponding to the target type, the target security device may be determined simply and accurately.

If there is only one candidate security device corresponding to the determined target type, then this one candidate security device is taken as the target security device. Or, if there are multiple candidate security devices corresponding to the determined target type, then one candidate security device may be determined as the target security device from these multiple candidate security devices according to a preset allocation policy.

For example, if the determined target type is a third-party security device and there is only one third-party security device, then the third-party security device is taken as the target security device. Or, if the determined target type is a third-party security device but there are multiple third-party security devices, then one third-party security device may be determined from these multiple third-party security devices as the target security device. The specific allocation policy may be set according to needs, such as random allocation, allocation based on session information, etc.

In this embodiment, by determining one third-party security device from the candidate security devices of the target type as the target security device, normal security processing of cloud network messages can still be performed when there are multiple candidate security devices of the target type, thus supporting horizontal expansion of security devices.

In some embodiments, the target security device may be determined from multiple candidate security devices of the target type based on the session information contained in the cloud network message; where target security devices corresponding to the same session information are the same.

Here, the session information may be session identification information, used to uniquely identify a session. Or,
The session information may include: a source Internet Protocol (IP) address and a destination IP address.

For two cloud network messages, if their source IP addresses and destination IP addresses are the same, then these two cloud network messages have the same session information, and these two cloud network messages are sent to the same target security device. The aforementioned "same" source IP address and destination IP address refers to order-independent sameness. For example, if the first message's source IP address is IP1 and destination IP address is IP2, and the second message's source IP address is IP2 and destination IP address is IP1, since both messages have IP1 and IP2 as their source and destination IP addresses, these two messages have the same session information.

Taking session information including a source IP address and a destination IP address as an example, the target security device maybe determined from multiple candidate security devices of the target type based on the source IP address and destination IP address contained in the cloud network message. For instance, an order-independent hash operation may be performed on the source IP address and destination IP address to obtain a hash value, and then the target security device may be determined based on this hash value and the number of candidate security devices of the target type.

In this embodiment, by determining the target security device through session information, it may be ensured that cloud network messages with the same session information are sent to the same target security device, which may improve the accuracy of security processing of cloud network messages and enhance the security capability of cloud security devices.

Taking session information including a source IP address and a destination IP address as an example, combination processing may be performed on the source IP address and destination IP address to obtain a combined IP address; an order-independent hash operation may be performed on this combined IP address to obtain a hash value; a modulo operation may be performed based on this hash value and the number of candidate security devices of the target type to obtain a remainder; and the candidate security device of the target type corresponding to this remainder may be taken as the target security device.

For example, for a certain cloud network message, if its source IP address and destination IP address are represented by IP1 and IP2 respectively, then IP1 and IP2 are combined, and the combined IP address may be represented as (IP1, IP2). Suppose two binary numbers are 110 and 101, then the combination of these two binary numbers would be 110101. The principle of IP address combination is the same.

After obtaining the combined IP address, an order-independent hash operation is performed on this combined IP address. A hash operation refers to converting an input of arbitrary length into an output of fixed length.

An order-independent hash operation means: hash(IP1,IP2) = hash(IP2,IP1).

Suppose the hash value is represented by M, and the number of candidate security devices of the target type is represented by N, then the modulo operation refers to calculating the remainder of M relative to N. For example, if N=3, then the remainder may be 0, 1, or 2.

Additionally, a correspondence between remainders and candidate security devices may be pre-configured, and the target security device may be determined based on the calculated remainder and this correspondence. For example, remainder 0 corresponds to a first virtual firewall, remainder 1 corresponds to a second virtual firewall, and remainder 2 corresponds to a third virtual firewall. If the calculated remainder is 0, then the target firewall is the first virtual firewall.

In this embodiment, by performing an order-independent hash operation on the combined IP address and determining the target security device based on the hash value and the number of candidate security devices of the target type, it may be ensured simply and efficiently that cloud network messages with the same session information are sent to the same target security device, which may improve the accuracy of security processing of cloud network messages and enhance the security capability of cloud security devices.

Figure 5 is a schematic diagram according to a third embodiment of the present disclosure, which provides a cloud network message processing apparatus. The apparatus 500 includes: an obtaining module 501, a determining module 502, and a forwarding module 503.

The obtaining module 501 is used to obtain cloud network messages; the cloud network messages are sent from a source end to a cloud security device. The determining module 502 is used to determine the target security device corresponding to the cloud network message from pre-configured multiple types of candidate security devices; where the candidate security devices include: a built-in security device inside the cloud security device, and a third-party security device outside the cloud security device. The forwarding module 503 is used to send the cloud network message to the target security device for security processing, and to send the security-processed cloud network message to the destination end.

In this embodiment, by providing third-party security devices as candidate security devices, determining the target security device from the candidate security devices, and performing security processing on cloud network messages through the target security device, when the target security device is a third-party security device, the third-party security device processes the cloud network messages, thus achieving support for third-party security devices in the cloud. Additionally, this embodiment processes cloud network messages sent from the source end to the cloud security device, so there is no need to change the routing policy at the source end. The source end may still send cloud network messages to the cloud security device according to the default routing policy, which reduces implementation complexity compared to the method of changing routing policies.

In some embodiments, the interior of the cloud security device also includes: a traffic director; the obtaining module 501 is further used to: use the traffic director to receive the cloud network message sent from the source end.

In this embodiment, by providing a traffic director inside the cloud security device, cloud network messages received by the cloud security device from the source end may be forwarded to the target security device. This way, there's no need for the source end to perform operations such as changing routing policies. Cloud network messages may be forwarded to the target security device of the type required by the user without the user's awareness, thus supporting various types of target security devices in the cloud environment in a simple and efficient manner.

In some embodiments, the determining module 502 is further used to:
Determine the target type corresponding to the identification information contained in the cloud network message;
Determine the target security device from the candidate security devices corresponding to the target type.

In this embodiment, by determining the target type based on the identification information contained in the cloud network, and then determining the target security device based on the candidate security devices corresponding to the target type, the target security device may be determined simply and accurately.

In some embodiments, the determining module 502 is further used to:
If there is only one candidate security device of the target type, take this one candidate security device of the target type as the target security device; or,
If there are multiple candidate security devices of the target type, determine the target security device from these multiple candidate security devices of the target type.

In this embodiment, by determining one security device from the candidate security devices of the target type as the target security device, normal security processing of cloud network messages may still be performed when there are multiple candidate security devices of the target type, thus supporting horizontal expansion of security devices.

In some embodiments, the determining module 502 is further used to:
Based on the session information contained in the cloud network message, determine the target security device from multiple candidate security devices of the target type; where target security devices corresponding to a same session information are the same.

In this embodiment, by determining the target security device through session information, it may be ensured that cloud network messages with the same session information are sent to the same target security device, which may improve the accuracy of security processing of cloud network messages and enhance the security capability of cloud security devices.

In some embodiments, the session information includes: a source IP address and a destination IP address;

The determining module 502 is further used to:
Perform combination processing on the source IP address and destination IP address to obtain a combined IP address;
Perform an order-independent hash operation on the combined IP address to obtain a hash value;
Perform a modulo operation based on the hash value and the number of candidate security devices of the target type to obtain a remainder;
Take the candidate security device of the target type corresponding to the remainder as the target security device.

In this embodiment, by performing an order-independent hash operation on the combined IP address and determining the target security device based on the hash value and the number of candidate security devices of the target type, it may be ensured simply and efficiently that cloud network messages with the same session information are sent to the same target security device, which may improve the accuracy of security processing of cloud network messages and enhance the security capability of cloud security devices.

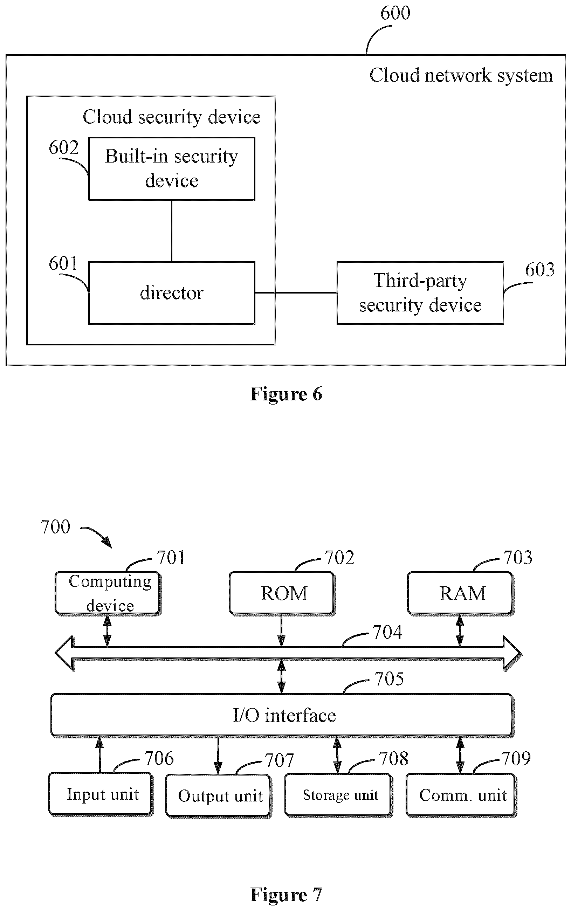

Figure 6 is a schematic diagram according to a fourth embodiment of the present disclosure, which provides a cloud network system. The system 600 includes: a traffic director 601, a built-in security device 602 provided inside the cloud security device, and a third-party security device 603 provided outside the cloud security device.

The traffic director 601 is used to obtain cloud network messages; determine the target security device corresponding to the cloud network message from pre-configured multiple types of candidate security devices; send the cloud network message to the target security device for security processing, and send the security-processed cloud network message to the destination end; where the cloud network message is sent from a source end to the cloud security device; the candidate security devices include: the built-in security device and the third-party security device. The built-in security device 602 is used to perform security processing on the cloud network message after receiving it. The third-party security device 603 is used to perform security processing on the cloud network message after receiving it.

In this embodiment, by setting third-party security devices as candidate security devices, determining the target security device from the candidate security devices, and performing security processing on cloud network messages through the target security device, when the target security device is a third-party security device, the third-party security device processes the cloud network messages, thus achieving support for third-party security devices in the cloud. Additionally, this embodiment processes cloud network messages sent from the source end to the cloud security device, so there is no need to change the routing policy at the source end. The source end may still send cloud network messages to the cloud security device according to the default routing policy, which reduces implementation complexity compared to the method of changing routing policies.

In some embodiments, as shown in Figure 6, the traffic director 601 is provided inside the cloud security device; correspondingly, the traffic director 601 is further used to: receive the cloud network message sent from the source end.

In this embodiment, by providing a traffic director inside the cloud security device, cloud network messages received by the cloud security device from the source end may be forwarded to the target security device. This way, there's no need for the source end to perform operations such as changing routing policies. Cloud network messages may be forwarded to the target security device of the type required by the user without the user's awareness, thus supporting various types of target security devices in the cloud environment in a simple and efficient manner.

In some embodiments, the traffic director 601 is further used to:
Determine the target type corresponding to the identification information contained in the cloud network message;
Determine the target security device from the candidate security devices corresponding to the target type.

In this embodiment, by determining the target type based on the identification information contained in the cloud network, and then determining the target security device based on the candidate security devices corresponding to the target type, the target security device may be determined simply and accurately.

In some embodiments, the traffic director 601 is further used to:
If there is only one candidate security device of the target type, take this one candidate security device of the target type as the target security device; or,
If there are multiple candidate security devices of the target type, determine the target security device from these multiple candidate security devices of the target type.

In this embodiment, by determining one security device from the candidate security devices of the target type as the target security device, normal security processing of cloud network messages may still be performed when there are multiple candidate security devices of the target type, thus supporting horizontal expansion of security devices.

In some embodiments, the traffic director 601 is further used to:
Based on the session information contained in the cloud network message, determine the target security device from multiple candidate security devices of the target type; where target security devices corresponding to the same session information are the same.

In this embodiment, by determining the target security device through session information, it may be ensured that cloud network messages with the same session information are sent to the same target security device, which may improve the accuracy of security processing of cloud network messages and enhance the security capability of cloud security devices.

In some embodiments, the session information includes: a source IP address and a destination IP address;

The traffic director 601 is further used to:
Perform combination processing on the source IP address and destination IP address to obtain a combined IP address;
Perform an order-independent hash operation on the combined IP address to obtain a hash value;
Perform a modulo operation based on the hash value and the number of candidate security devices of the target type to obtain a remainder;
Take the candidate security device of the target type corresponding to the remainder as the target security device.

In this embodiment, by performing an order-independent hash operation on the combined IP address and determining the target security device based on the hash value and the number of candidate security devices of the target type, it may be ensured simply and efficiently that cloud network messages with the same session information are sent to the same target security device, which may improve the accuracy of security processing of cloud network messages and enhance the security capability of cloud security devices.

It should be understood that in the embodiments of the present disclosure, the same or similar content in different embodiments may be cross-referenced.

It should be understood that in the embodiments of the present disclosure, terms like "first", "second", etc. are only used for distinction and do not indicate importance or temporal order.

It should be understood that unless otherwise specified, the order of steps mentioned in the process does not imply a fixed temporal relationship between these steps.

In the technical solutions of the present disclosure, the collection, storage, use, processing, transmission, provision, and disclosure of user personal information are all in compliance with relevant laws and regulations, and do not violate public order and good morals.

According to the embodiments of the present disclosure, the present disclosure also provides an electronic device, a readable storage medium, and a computer program product.

Figure 7 shows a schematic block diagram of an exemplary electronic device 700 that may be used to implement the embodiments of the present disclosure. The electronic device 700 is intended to represent various forms of digital computers, such as laptops, desktops, workstations, servers, blade servers, mainframes, and other suitable computers. The electronic device may also represent various forms of mobile devices, such as personal digital assistants, cellular phones, smartphones, wearable devices, and other similar computing devices. The components shown here, their connections and relationships, and their functions are meant to be exemplary only, and are not meant to limit implementations of the disclosure described and/or claimed in this document.

As shown in Figure 7, the electronic device 700 includes a computing unit 701, which may perform various appropriate actions and processes according to computer programs stored in a Read-Only Memory (ROM) 702 or loaded into a Random Access Memory (RAM) 703 from a storage unit 708. Various programs and data needed for the operation of the electronic device 700 may also be stored in the RAM 703. The computing unit 701, ROM 702, and RAM 703 are connected to each other via a bus 704. An Input/Output (I/O) interface 705 is also connected to the bus 704.

Multiple components in the electronic device 700 are connected to the I/O interface 705, including: an input unit 706, such as a keyboard, mouse, etc.; an output unit 707, such as various types of displays, speakers, etc.; a storage unit 708, such as magnetic disks, optical disks, etc.; and a communication (comm.) unit 709, such as network cards, modems, wireless communication transceivers, etc. The communication unit 709 allows the electronic device 700 to exchange information/data with other devices through computer networks such as the Internet and/or various telecommunication networks.

The computing unit 701 may be various general-purpose and/or special-purpose processing components with processing and computing capabilities. Some examples of the computing unit 701 include, but are not limited to, Central Processing Units (CPUs), Graphics Processing Units (GPUs), various specialized Artificial Intelligence (AI) computing chips, various computing units running machine learning model algorithms, Digital Signal Processors (DSPs), and any suitable processors, controllers, microcontrollers, etc. The computing unit 701 executes the various methods and processes described above, such as the cloud network message processing method. For example, in some embodiments, the cloud network message processing method may be implemented as a computer software program, which is tangibly included in a machine-readable medium, such as the storage unit 708. In some embodiments, part or all of the computer program may be loaded and/or installed onto the electronic device 700 via the ROM 702 and/or the communication unit 709. When the computer program is loaded into the RAM 703 and executed by the computing unit 701, one or more steps of the cloud network message processing method described above may be executed. Alternatively, in other embodiments, the computing unit 701 may be configured to execute the cloud network message processing method through any other suitable means (for example, with the aid of firmware).

The various implementations of the systems and techniques described herein may be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The systems and techniques described here may be implemented in a computing system that includes a back end component (e.g., as a data server), or that includes a middleware component (e.g., an application server), or that includes a front end component (e.g., a client computer having a graphical user interface or a Web browser through which a user may interact with an implementation of the systems and techniques described here), or any combination of such back end, middleware, or front end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other. The server may be a cloud server, also known as a cloud computing server or cloud host, which is a host product in the cloud computing service system, solving the problems of difficult management and weak business scalability existing in traditional physical hosts and VPS (Virtual Private Server) services. The server may also be a server for distributed systems, or a server combined with blockchain.

It should be understood that various forms of the processes shown above may be used, with steps re-ordered, added, or removed. For example, the steps recorded in the present disclosure may be executed in parallel, sequentially, or in a different order, as long as they may achieve the desired results of the technical solutions disclosed in the present disclosure. This document does not impose any limitations in this regard.

The above specific embodiments do not constitute limitations on the scope of protection of the present disclosure. It should be understood by those skilled in the art that various modifications, combinations, sub-combinations and substitutions may be made according to design requirements and other factors. Any modifications, equivalent replacements, improvements, etc. made within the spirit and principles of the present disclosure should be included within the scope of protection of the present disclosure.

## Claims

1. A cloud network message processing method, comprising:
obtaining (101) a cloud network message; wherein the cloud network message is sent from a source end to a cloud security device;
determining (102) a target security device for the cloud network message from pre-configured multiple types of candidate security devices; wherein the candidate security devices comprise: a built-in security device inside the cloud security device, and a third-party security device outside the cloud security device; and
sending (103, 403) the cloud network message to the target security device for security processing, and sending the cloud network message processed by the target security device to a destination end.

2. The method according to claim 1, wherein,
the cloud security device internally further comprises: a traffic director;
obtaining (101) the cloud network message comprises:
receiving (401), by the traffic director, the cloud network message sent from the source end.

3. The method according to claim 1 or 2, wherein determining (102) the target security device for the cloud network message from the pre-configured multiple types of candidate security devices comprises:
determining (402) a target type corresponding to identification information contained in the cloud network message;
determining (402) one or more candidate security devices of the target type from the pre-configured multiple types of candidate security devices; and
determining (402) the target security device from the one or more candidate security devices of the target type.

4. The method according to claim 3, wherein determining (402) the target security device from the one or more candidate security devices of the target type comprises:
in the case that there is only one candidate security device of the target type, taking the one candidate security device of the target type as the target security device; or
in the case that there are multiple candidate security devices of the target type, determining the target security device from the multiple candidate security devices of the target type.

5. The method according to claim 4, wherein determining the target security device from the multiple candidate security devices of the target type comprises:
determining the target security device from the multiple candidate security devices of the target type based on session information contained in the cloud network message; wherein target security devices corresponding to a same session information are identical.

6. The method according to claim 5, wherein,
the session information includes: a source IP address and a destination IP address;
determining the target security device from the multiple candidate security devices of the target type based on session information contained in the cloud network message comprises:
performing combination processing on the source IP address and the destination IP address to obtain a combined IP address;
performing an order-independent hash operation on the combined IP address to obtain a hash value;
performing a modulo operation based on the hash value and the number of candidate security devices of the target type to obtain a remainder; and
taking the candidate security device of the target type corresponding to the remainder as the target security device.

7. A cloud network system, comprising:
a traffic director, a built-in security device provided inside a cloud security device, and a third-party security device provided outside the cloud security device;
the traffic director is configured for obtaining (101, 401)a cloud network message; determining (102, 402) a target security device for the cloud network message from pre-configured multiple types of candidate security devices; sending (103, 403) the cloud network message to the target security device for security processing, and sending the cloud network message processed by the target security device to a destination end; wherein the cloud network message is sent from a source end to the cloud security device; and the candidate security devices comprise: the built-in security device and the third-party security device;
the built-in security device is configured for performing security processing on the cloud network message after receiving the cloud network message;
the third-party security device is configured for performing security processing on the cloud network message after receiving the cloud network message.

8. The system according to claim 7, wherein,
the traffic director is provided inside the cloud security device;
correspondingly, the traffic director is further configured for: receiving the cloud network message sent from the source end.

9. The system according to claim 8, wherein the traffic director is further configured for:
determining a target type corresponding to identification information contained in the cloud network message;
determining the target security device from one or more candidate security devices corresponding to the target type.

10. The system according to claim 9, wherein the traffic director is further configured for:
in the case that there is only one candidate security device of the target type, taking the one candidate security device of the target type as the target security device; or
in the case that there are multiple candidate security devices of the target type, determining the target security device from the multiple candidate security devices of the target type.

11. The system according to claim 10, wherein the traffic director is further configured for:
determining the target security device from the multiple candidate security devices of the target type based on session information contained in the cloud network message; wherein target security devices corresponding to a same session information are identical.

12. The system according to claim 10, wherein,
the session information includes: a source IP address and a destination IP address;
the traffic director is further configured for:
performing combination processing on the source IP address and the destination IP address to obtain a combined IP address;
performing an order-independent hash operation on the combined IP address to obtain a hash value;
performing a modulo operation based on the hash value and the number of candidate security devices of the target type to obtain a remainder; and
taking the candidate security device of the target type corresponding to the remainder as the target security device.

13. An electronic device, comprising:
at least one processor; and
a memory communicatively connected to the at least one processor;
wherein, the memory stores instructions executable by the at least one processor, the instructions when executed by the at least one processor cause the at least one processor to perform the method according to any one of claims 1-6.

14. A non-transitory computer-readable storage medium comprising instructions, which, when executed by a computer, cause the computer to carry out the method according to any of claims 1-6.

15. A computer program product comprising computer programs, when executed by a processor, cause the processor to carry out the method according to any of claims 1-6.
